# EUROPEAN PATENT APPLICATION

(11) **EP 4 380 309 A1**
(43) Date of publication of application: **05.06.2024**
(21) Application number: 22872044.7
(22) Date of filing: 22.09.2022
(51) Int. Cl.: H05B 3/84, H05B 3/06

(54) **VEHICLE WINDOW ASSEMBLY AND VEHICLE**

(30) Priority: 22.09.2021 CN 202111108266
(71) Applicant: Fuyao Glass Industry Group Co., Ltd., Fuzhou, Fujian 350300 (CN)
(72) Inventor: GUO, Yong, Fuzhou, Fujian 350300 (CN); GUAN, Jinliang, Fuzhou, Fujian 350300 (CN); CHEN, Min, Fuzhou, Fujian 350300 (CN); LIU, Chunxin, Fuzhou, Fujian 350300 (CN); ZHANG, Canzhong, Fuzhou, Fujian 350300 (CN)
(74) Representative: Mewburn Ellis LLP
(86) International application number: PCT/CN2022/120431
(87) International publication number: WO 2023/045999

(57) **Abstract**

A vehicle window assembly and a vehicle are provided. The vehicle window assembly (1) includes a vehicle window glass (11), at least two sensors (12), and a heating component (13). The vehicle window glass (11) has a functional region (111). At least two signal transmission windows (1111) are defined at intervals in the functional region (111). The at least two sensors (12) are mounted at an inner side of the vehicle window glass (11). Positions of the at least two sensors (12) are in a one-to-one correspondence with positions of the at least two signal transmission windows (1111). The heating component (13) includes at least one linear heating element (131). At least one signal transmission window (1111) of the at least two signal transmission windows (1111) is extended through by the at least one linear heating element (131) multiple times. At least another signal transmission window (1111) of the at least two signal transmission windows (1111) is not extended through by the at least one linear heating element (131). With an arrangement design of the heating component (13), the heating component (13) heats one of the signal transmission windows (1111), and heats the peripheral regions of the rest of the signal transmission windows (1111). Therefore, multiple signal transmission windows (1111) are heated at the same time, thereby accelerating a defogging effect and a defrosting effect, and having a better arrangement of heating regions.

## Description

### CROSS-REFERENCE TO RELATED APPLICATION(S)

This application claims priority to Chinese Patent Application No. 202111108266.4, filed September 22, 2021, and entitled "VEHICLE WINDOW ASSEMBLY AND VEHICLE", the entire disclosure of which is incorporated herein by reference.

### TECHNICAL FIELD

This disclosure relates to the field of vehicle part technology, and in particular to a vehicle window assembly and a vehicle.

### BACKGROUND

Vehicles have become one of important transportation means in daily life of people. At present, sensors are integrated on a front vehicle window glass and a rear vehicle window glass, so as to provide more assistance for drivers, thereby assisting the drivers in driving.

When encountering severe weather such as rain, snow, frost, etc., fog, frost, and other conditions may occur on a vehicle window glass, which affects image acquisition and makes it difficult to assist the drivers in driving. In the related art, a sensor window on the vehicle window glass is heated by a conductive wire to defog and defrost. However, at present, with more and more sensors integrated on the vehicle window glass, the related art cannot meet design requirements for heating multiple sensor window regions, and arrangement of heating regions is relatively poor.

### SUMMARY

A vehicle window assembly is disclosed in the present disclosure, so that design requirements for heating multiple sensor window regions can be met and technical problems of poor arrangement of heating regions can be solved.

In a first aspect, a vehicle window assembly is provided in the present disclosure. The vehicle window assembly includes a vehicle window glass, at least two sensors, and a heating component. The vehicle window glass has a functional region. At least two signal transmission windows are defined at intervals in the functional region. The at least two sensors are mounted at an inner side of the vehicle window glass. Positions of the at least two sensors are in a one-to-one correspondence with positions of the at least two signal transmission windows. The heating component includes at least one linear heating element. At least one signal transmission window of the at least two signal transmission windows is extended through by the at least one linear heating element multiple times. At least another signal transmission window of the at least two signal transmission windows is not extended through by the at least one linear heating element.

With an arrangement design of the heating component, the heating component heats one of the signal transmission windows, and heats peripheral regions of the rest of the signal transmission windows. Therefore, multiple signal transmission windows are heated at the same time, thereby accelerating a defogging effect and a defrosting effect, and having a better arrangement of heating regions.

Optionally, the at least one linear heating element each is a metal wire, a printed silver paste wire, or a carbon fiber wire.

Optionally, the vehicle window glass is a single sheet of tempered glass. The heating component is fixed between the vehicle window glass and the at least two sensors.

Optionally, the vehicle window glass includes a first transparent plate, a thermoplastic interlayer, and a second transparent plate. The thermoplastic interlayer is bonded between the first transparent plate and the second transparent plate. The heating component is fixed between the first transparent plate and the at least two sensors.

Optionally, the at least one signal transmission window of the at least two signal transmission windows is extended through by the at least one linear heating element along a straight path, an arc path, a sinusoidal path, and a rectangular wave-shaped path the multiple times.

Optionally, the at least another signal transmission window of the at least two signal transmission windows that is not extended through by the at least one linear heating element has at least one edge surrounded by the at least one linear heating element.

Optionally, the at least two sensors each are selected from a group consisting of a visible light camera, an infrared camera, a LiDAR, a rain sensor, and a touch sensor.

Optionally, the vehicle window assembly further includes a bracket. The bracket is disposed corresponding to the functional region. The at least two sensors are mounted on the bracket.

Optionally, the at least one linear heating element each includes a first portion and a second portion connected to the first portion. The first portion is configured to be electrically connected to a power source. The second portion is disposed in the signal transmission window. The at least one linear heating element each further includes a third portion and a fourth portion connected to the third portion. The third portion is configured to be electrically connected to the power source. At least one edge of the signal transmission window of the at least two signal transmission windows is surrounded by the fourth portion. A ratio of a total length of the fourth portion to a total length of the second portion ranges from 0.3 to 2.5.

Optionally, at least three edges of the at least one signal transmission window of the at least two signal transmission windows are surrounded by the fourth portion.

Optionally, when the at least one linear heating element each is the metal wire, the at least one linear heating element each is any one or more of a copper wire, a tungsten wire, an aluminum wire, or a copper alloy wire, and the at least one linear heating element each has a diameter ranging from 0.01 mm to 0.5 mm. When the at least one linear heating element each is the printed silver paste wire, the at least one linear heating element each has a printed wire-width ranging from 0.1 mm to 1.0 mm, and a printed thickness ranging from 3 µm to 20 µm. When the at least one linear heating element each is the carbon fiber wire, the at least one linear heating element each has a diameter ranging from 0.01 mm to 0.5 mm.

Optionally, the at least two signal transmission windows are implemented as three signal transmission windows.

Optionally, a left signal-transmission-window, a middle signal-transmission-window, and a right signal-transmission-window are defined in the functional region. The middle signal-transmission-window is extended through by the at least one linear heating element back and forth. The left signal-transmission-window is not extended through by the at least one linear heating element back and forth, and all edges of the left signal-transmission-window are not surrounded by the at least one linear heating element. An upper edge of the right signal-transmission-window is surrounded by the at least one linear heating element.

Optionally, a left signal-transmission-window, a middle signal-transmission-window, and a right signal-transmission-window are defined in the functional region. The middle signal-transmission-window is extended through by the at least one linear heating element back and forth. The left signal-transmission-window is not extended through by the at least one linear heating element back and forth. All edges of the left signal-transmission-window are not surrounded by the at least one linear heating element. An upper edge, a lower edge, and a right edge of the right signal-transmission-window are all surrounded by the at least one linear heating element.

Optionally, a left signal-transmission-window, a middle signal-transmission-window, and a right signal-transmission-window are defined in the functional region. The middle signal-transmission-window is extended through by the at least one linear heating element back and forth. An upper edge, a lower edge, and a left edge of the left signal-transmission-window are all surrounded by the at least one linear heating element. An upper edge, a lower edge, and a right edge of the right signal-transmission-window are all surrounded by the at least one linear heating element.

In a second aspect, a vehicle is further provided in the present disclosure. The vehicle includes the vehicle window assembly in the first aspect and a vehicle frame. The vehicle window assembly is mounted on the vehicle frame.

### BRIEF DESCRIPTION OF THE DRAWINGS

To describe the technical solutions in implementations of the present disclosure more clearly, the accompanying drawings for use in the implementations are briefly described. Apparently, the accompanying drawings in the following description show merely some implementations of the present disclosure, and those of ordinary skill in the art may obtain other accompanying drawings from these accompanying drawings without creative effort.
FIG. 1 is a schematic top view of a vehicle window assembly provided in an implementation of the present disclosure.
FIG. 2 is a partial schematic cross-sectional view of FIG. 1 taken along line I-I.
FIG. 3 is a partial schematic cross-sectional view of a vehicle window glass provided in an implementation of the present disclosure.
FIG. 4 is a partial schematic cross-sectional view of a vehicle window glass provided in another implementation of the present disclosure.
FIG. 5 is a schematic view of a heating region provided in an implementation of the present disclosure.
FIG. 6 is a schematic view of a heating region provided in another implementation of the present disclosure.
FIG. 7 is a schematic view of a heating region provided in yet another implementation of the present disclosure.
FIG 8. is a schematic view of a heating region provided in yet another implementation of the present disclosure.
FIG. 9 is a schematic top view of a vehicle provided in an implementation of the present disclosure.

Description of reference signs of the accompanying drawings: vehicle window assembly - 1, vehicle window glass - 11, functional region - 111, signal transmission window - 1111, first transparent plate - 112, thermoplastic interlayer - 113, second transparent plate - 114, thermoplastic polyester - 115, sensor - 12, heating component - 13, linear heating element - 131, first portion - 1311, second portion - 1312, third portion - 1313, fourth portion - 1314, bracket - 14, vehicle - 2, vehicle frame - 21.

### DETAILED DESCRIPTION

Technical solutions of implementations of the present disclosure will be described clearly and completely below with reference to accompanying drawings in implementations of the present disclosure. Apparently, implementations described herein are merely some implementations, rather than all implementations, of the present disclosure. Based on implementations of the present disclosure, all other implementations obtained by those of ordinary skill in the art without creative effort shall fall within the protection scope of the present disclosure.

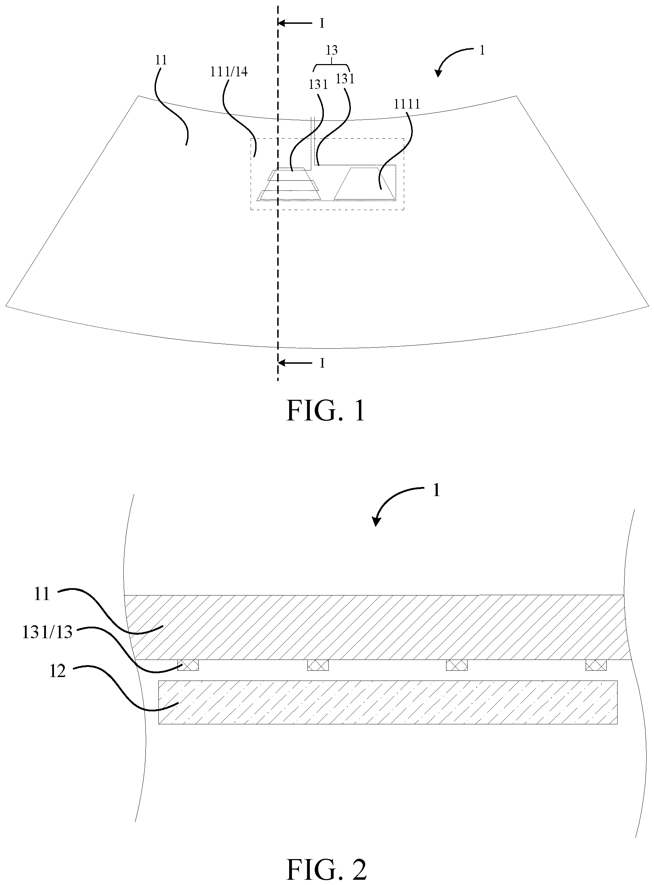

A vehicle window assembly is provided in the present disclosure. Reference can be made to FIG. 1 and FIG. 2 together, where FIG. 1 is a schematic top view of a vehicle window assembly provided in an implementation of the present disclosure, and FIG. 2 is a partial schematic cross-sectional view of FIG. 1 taken along line I-I. The vehicle window assembly 1 includes a vehicle window glass 11, at least two sensors 12, and a heating component 13. The vehicle window glass 11 has a functional region 111. At least two signal transmission windows 1111 are defined at intervals in the functional region 111. The at least two sensors 12 are mounted at an inner side of the vehicle window glass 11. Positions of at least two sensors 12 are in a one-to-one correspondence with positions of the at least two signal transmission windows 1111. The heating component 13 includes at least one linear heating element 131. At least one signal transmission window 1111 of the at least two signal transmission windows 1111 is extended through by the at least one linear heating element 131 multiple times. At least another signal transmission window 1111 of the at least two signal transmission windows 1111 is not extended through by the at least one linear heating element 131.

It may be noted that in order to better observe distribution of the at least two sensors 12 and the heating component 13 behind the vehicle window glass 11, the at least two sensors 12 and the heating component 13 are shown in perspective in FIG. 1. In this implementation, the sensor 12 at least includes an image sensor 12 capable of acquiring an image of the front of the vehicle window glass 11 through the signal transmission window 1111. In this implementation, the signal transmission window 1111 is in a trapezoid shape. In other possible implementations, the signal transmission window 1111 may also be in other shapes, such as a rectangle, a triangle, a circle, etc., which is not limited in the present disclosure.

It can be understood that in severe weather such as rain, snow, frost, etc., the vehicle window glass 11 tends to fog or frost easily, resulting in the sensor 12 being unable to acquire a clear view of the front of the vehicle window glass 11. By heating the vehicle window glass 11, defogging and defrosting can be accelerated, so that the sensor 12 is able to acquire the clear view of the front of the vehicle window glass 11.

It may be noted that the heating component 13 is a resistance heating element. When a current flows through the heating component 13, the heating component 13 generates a certain amount of heat. Since an onboard voltage is substantially constant, the amount of heat generated by the heating component 13 is generally negatively related to a resistance value of the heating component 13. Meanwhile, considering that at least part of the heating component 13 may extend through the signal transmission window 1111, in order to reduce interference of the heating component 13 on image acquisition by the sensor 12, the heating component 13 is generally selected with a size as small as possible. In other words, in this implementation, the heating component 13 has an appropriate resistance value, which not only ensures that the heating component 13 can generate a certain amount of heat to heat the vehicle window glass 11 when the heating component 13 is powered on, but also avoids the heating component 13 from interfering with the sensor 12 to acquire the image.

In this implementation, one end of the linear heating element 131 is connected to a positive pole of a power source, and the other end of the linear heating element 131 is connected to a negative pole of the power source, so that a current flows through the linear heating element 131. At least one of the signal transmission windows 1111 is extended through by the at least one linear heating element multiple times, so as to heat a corresponding signal transmission window 1111 on the vehicle window glass 11. At least another one of the signal transmission windows 1111 is not extended through by the at least one linear heating element 131, so that defrosting and defogging requirements of a specific signal transmission window are met, and the at least one linear heating element 131 is arranged more reasonably.

It can be understood that in this implementation, with an arrangement design of the heating component 13, the heating component 13 heats an entire region of one of the signal transmission windows 1111, and heats a peripheral region of at least one of the rest of the signal transmission windows 1111. Therefore, multiple signal transmission windows 1111 are heated differentially at the same time, thereby accelerating a defogging effect and a defrosting effect, and having a better arrangement of heating regions.

In a possible implementation, the linear heating element 131 is a metal wire, a printed silver paste wire, or a carbon fiber wire.

Specifically, when the linear heating element 131 is the metal wire, the linear heating element 131 may be any one or more of a copper wire, a tungsten wire, an aluminum wire, or a copper alloy wire, and the diameter of the linear heating element 131 ranges from 0.01 mm to 0.5 mm. Preferably, the diameter of the linear heating element 131 may also range from 0.1 mm to 0.4 mm. Specifically, the diameter of the linear heating element 131 may also be 0.17 mm, 0.23 mm, 0.31 mm, 0.39 mm, and the like, which is not limited in the present disclosure.

When the linear heating element 131 is the printed silver paste wire, the printed wire-width of the linear heating element 131 ranges from 0.1 mm to 1.0 mm, and the printed thickness of the linear heating element 131 ranges from 3 µm to 20 µm.

When the linear heating element 131 is the carbon fiber wire, the diameter of the linear heating element 131 ranges from 0.01 mm to 0.5 mm. Preferably, the diameter of the linear heating element 131 may also range from 0.1 mm to 0.4 mm. Specifically, the diameter of the linear heating element 131 may also be 0.14 mm, 0.21 mm, 0.27 mm, 0.34 mm, and the like, which is not limited in the present disclosure.

It may be noted that when the linear heating elements 131 are different, the linear heating elements 131 may be arranged at different positions in the vehicle window assembly 1. Next, examples of arrangement positions of the linear heating elements 131 in the vehicle window assembly 1 will be described.

In a possible implementation, referring to FIG. 2 again, the vehicle window glass 11 is a single sheet of tempered glass, for example, used as a rear window glass. The heating component 13 is fixed on a surface of the vehicle window glass 11 at the inner side of the vehicle. The sensor 12 is fixed in the vehicle and faces the heating component 13. The heating component 13 is disposed between the vehicle window glass 11 and the sensor 12.

It can be understood that since the heating component 13 is disposed between the vehicle window glass 11 and the sensor 12, the heating component 13 with a relatively small diameter is required, so as to allow the sensor 12 to acquire external environment information through the signal transmission window 1111.

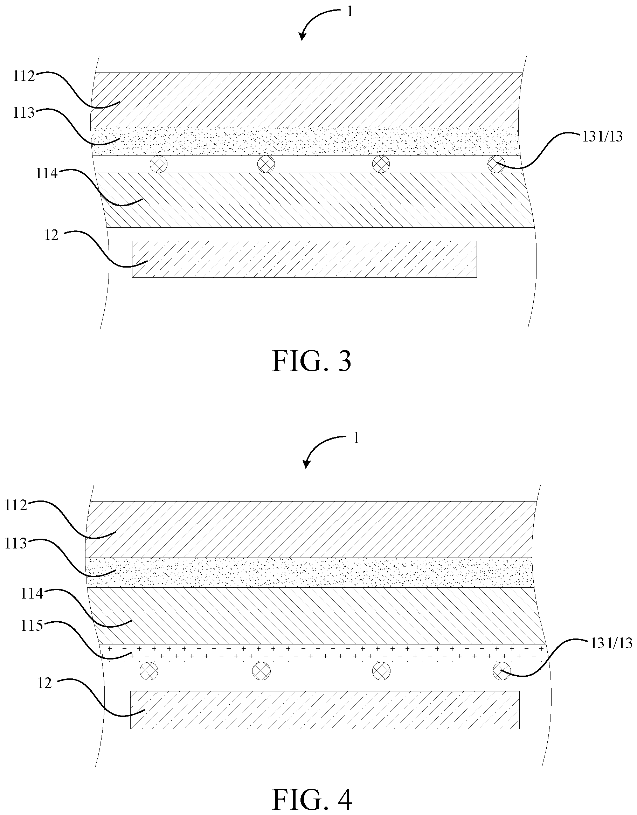

In a possible implementation, reference can be made to FIG. 3 together, where FIG. 3 is a partial schematic cross-sectional view of a vehicle window glass provided in an implementation of the present disclosure. The vehicle window glass 11 includes a first transparent plate 112, a thermoplastic interlayer 113, and a second transparent plate 114. The thermoplastic interlayer 113 is bonded between the first transparent plate 112 and the second transparent plate 114. The heating component 13 is fixed between the first transparent plate 112 and the sensor 12.

Specifically, the vehicle window glass 11 is a laminated glass. In this implementation, the first transparent plate 112 serves as an outer glass plate of the vehicle window glass 11. The second transparent plate 114 serves as an inner glass plate of the vehicle window glass 11. The material of the thermoplastic interlayer 113 may be selected from a group consisting of transparent polyvinyl butyral (PVB), transparent ethylene vinyl acetate (EVA), transparent polyacrylate (PA), transparent polymethyl methacrylate (PMMA), a transparent ionic interlayer (e.g., SentryGlas^{®} Plus (SGP)), transparent polyurethane (PU), etc., so as to allow the sensor 12 to acquire external environment information through the first transparent plate 112.

Specifically, the heating component 13 may be disposed on a surface of the first transparent plate 112 close to the thermoplastic interlayer 113, or disposed between the first transparent plate 112 and the thermoplastic interlayer 113, or disposed on at least one surface of the thermoplastic interlayer 113, or disposed between the thermoplastic interlayer 113 and the second transparent plate 114, or disposed on at least one surface of the second transparent plate 114.

In FIG. 3, the heating component 13 may be directly disposed on a surface of the thermoplastic interlayer 113 close to the second transparent plate 114. At least part of the heating component 13 may be coated by the thermoplastic interlayer 113 by heating and/or organic dissolution. In FIG. 4, the heating component 13 is disposed on a surface of the second transparent plate 114 away from the thermoplastic interlayer 113. The heating component 13 is fixed on the second transparent plate 114 by printing or bonding.

It can be understood that in other possible implementations, as illustrated in FIG. 4, the heating component 13 may also be disposed on a surface of the thermoplastic polyester 115 (e.g., polyethylene terephthalate (PET)). The PET provided with the heating component 13 may be sandwiched between the first transparent plate 112 and the second transparent plate 114, or may be bonded to the surface of the second transparent plate 114 away from the thermoplastic interlayer 113.

In a possible implementation, referring to FIG. 1 again, the at least one signal transmission window 1111 is extended through by the at least one linear heating element 131 along a straight path, an arc path, a sinusoidal path, and a rectangular wave-shaped path multiple times.

In this implementation, referring to FIG. 1 and FIG. 2, it can be concluded the following. There are two sensors 12. One of the signal transmission windows 1111 is extended through by the linear heating element 131 back and forth, and the other of the signal transmission windows 1111 is surrounded by the linear heating element 131. Therefore, the linear heating element 131 can heat the entire region of one of the signal transmission windows 1111 and also heat the peripheral region of the other of the signal transmission windows 1111.

In a possible implementation, referring to FIG. 1 again, the at least another signal transmission window 1111 that is not extended through by the at least one linear heating element 131 has at least one edge surrounded by the at least one linear heating element 131.

Specifically, in this implementation, the at least another signal transmission window 1111 that is not extended through by the at least one linear heating element 131 has the at least one edge surrounded by the at least one linear heating element 131, so that a peripheral region of the vehicle window glass 11 corresponding to the at least one signal transmission window 1111 is heated. Therefore, multiple signal transmission windows 1111 are heated differentially at the same time, thereby accelerating the defogging effect and the defrosting effect, and having the better arrangement of heating regions.

In a possible implementation, the sensor 12 is selected from a group consisting of a visible light camera, an infrared camera, a LiDAR, a rain sensor, and a touch sensor.

Specifically, the visible light camera can acquire an image through the signal transmission window 1111, and provide the image acquired to a driver through an onboard display screen or other devices. Through the signal transmission window 1111, the infrared camera can recognize a living being or acquire an image at night. Through the signal transmission window 1111, the LiDAR (also known as light detection and ranging) can acquire a distance between the LiDAR and an obstacle or an object to-be-measured. Through the signal transmission window 1111, the rain sensor can recognize whether rain blocks the view of the driver. Through the signal transmission window 1111, the touch sensor can recognize a touch operation, thereby providing a user experience of convenient operation.

It can be understood that in other possible implementations, the sensor 12 may be of other types, which is not limited in the present disclosure.

In a possible implementation, referring to FIG. 1 again, the vehicle window assembly 1 further includes a bracket 14. The bracket 14 is disposed corresponding to the functional region 111. The sensor 12 is mounted on the bracket 14.

In this implementation, when the vehicle window glass 11 is a single sheet of tempered glass, the bracket 14 is connected to the vehicle window glass 11 and fixed on a surface of the vehicle window glass 11 at the inner side of the vehicle. When the vehicle window glass 11 is a laminated glass, the bracket 14 is fixed on a surface of the second transparent plate 114 at the inner side of the vehicle. It can be understood that in other possible implementations, as long as the arrangement of the functional region 111 corresponding to the sensor 12 is not affected, and the sensor 12 is mounted on the bracket 14, the arrangement manner of the bracket 14 is not limited in the present disclosure.

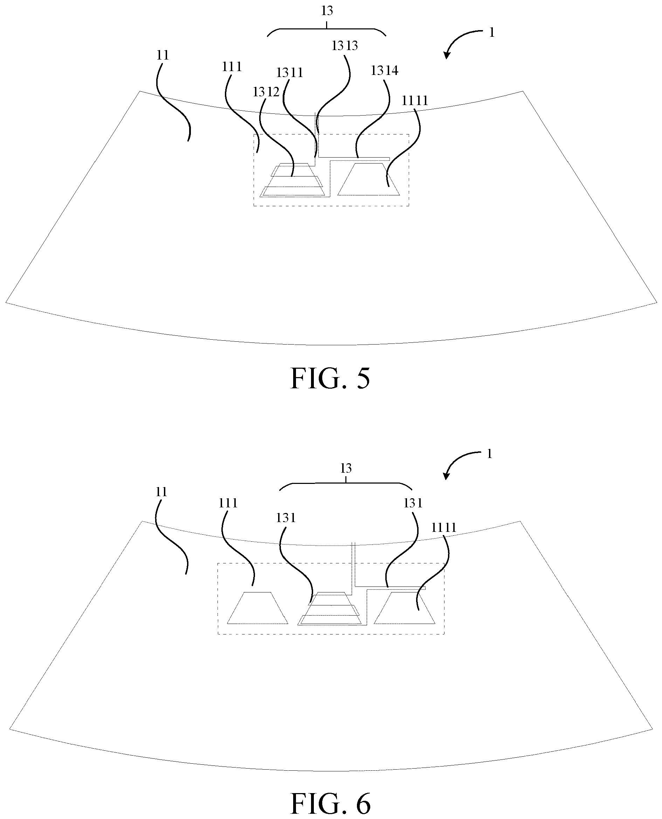

In a possible implementation, reference can be made to FIG. 5 together, where FIG. 5 is a schematic view of a heating region provided in an implementation of the present disclosure. The linear heating element 131 includes a first portion 1311 and a second portion 1312 connected to the first portion 1311. The first portion 1311 is configured to be electrically connected to a power source. The second portion 1312 is disposed in one signal transmission window 1111. The linear heating element 131 further includes a third portion 1313 and a fourth portion 1314 connected to the third portion 1313. The third portion 1313 is configured to be electrically connected to the power source. At least one edge of the other signal transmission window 1111 is surrounded by the fourth portion 1314. A ratio of a total length of the fourth portion 1314 to a total length of the second portion 1312 ranges from 0.3 to 2.5.

Specifically, by adjusting the ratio of the total length of the fourth portion 1314 to the total length of the second portion 1312, the heating power of the part of the linear heating element 131 extending through the signal transmission window 1111 can be adjusted. Therefore, the arrangement shape and path of the linear heating element 131 can be designed better, so as to meet heating power requirements of different onboard voltages, different sensors, etc.

It can be understood that in this implementation, a total length of the first portion 1311 and a total length of the third portion 1313 are relatively short and can be ignored. The ratio of the total length of the fourth portion 1314 to the total length of the second portion 1312 ranges from 0.3 to 2.5, so that heating power distribution on the linear heating element 131 is relatively appropriate.

It may be noted that in other possible implementations, the total length of the first portion 1311 and the total length of the third portion 1313 are relatively long, so that the heating power distribution on the linear heating element 131 can be adjusted by adjusting the ratio of the total length of the first portion 1311 and the second portion 1312 to the total length of the third portion 1313 and the fourth portion 1314.

In this implementation, there are two signal transmission windows 1111. The linear heating element 131 not extending through the signal transmission window 1111 is disposed close to an upper edge of the signal transmission window 1111, so as to heat an upper edge portion of the signal transmission window 1111.

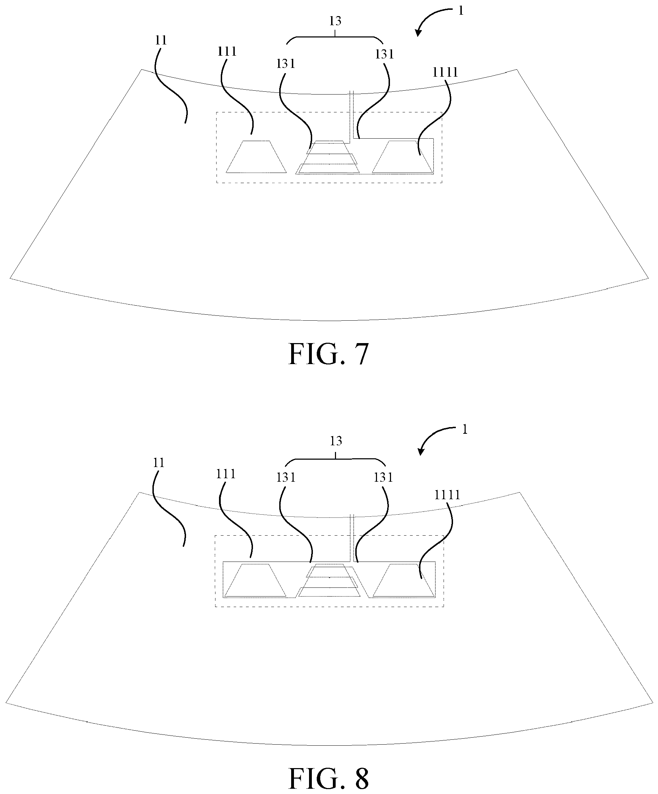

In a possible implementation, reference can be made to FIG. 6 to FIG. 8 together, where FIG. 6 is a schematic view of a heating region provided in another implementation of the present disclosure, FIG. 7 is a schematic view of a heating region provided in yet another implementation of the present disclosure, and FIG 8. is a schematic view of a heating region provided in yet another implementation of the present disclosure.

In this implementation, there are three signal transmission windows 1111. Specifically, as illustrated in FIG. 6, a middle signal-transmission-window 1111 is extended through by the linear heating element 131 back and forth. A left signal-transmission-window 1111 is not extended through by the linear heating element 131 back and forth, and all edges of the left signal-transmission-window 1111 are not surrounded by the linear heating element 131. An upper edge of a right signal-transmission-window 1111 is surrounded by the linear heating element 131. The linear heating element 131 is configured to heat an entire region of the middle signal-transmission-window 1111 and an upper edge region of the right signal-transmission-window 1111.

Specifically, as illustrated in FIG. 7, a middle signal-transmission-window 1111 is extended through by the linear heating element 131 back and forth. A left signal-transmission-window 1111 is not extended through by the linear heating element 131 back and forth, and all edges of the left signal-transmission-window 1111 are not surrounded by the linear heating element 131. An upper edge, a lower edge, and a right edge of a right signal-transmission-window 1111 are all surrounded by the linear heating element 131. The linear heating element 131 is configured to heat the entire region of the middle signal-transmission-window 1111 and corresponding three edge regions of the right signal-transmission-window 1111.

Specifically, as illustrated in FIG. 8, a middle signal-transmission-window 1111 is extended through by the linear heating element 131 back and forth. An upper edge, a lower edge, and a left edge of the left signal-transmission-window 1111 are all surrounded by the linear heating element 131. An upper edge, a lower edge, and a right edge of a right signal-transmission-window 1111 are all surrounded by the linear heating element 131. The linear heating element 131 is configured to heat the entire region of the middle signal-transmission-window 1111 and corresponding three edge regions of each of two signal transmission windows 1111 at two sides of the middle signal-transmission-window 1111.

It can be understood that in other possible implementations, there may also be other quantities of signal transmission windows 1111, and the heating component 13 may also be arranged in other manners, which are not limited in the present disclosure.

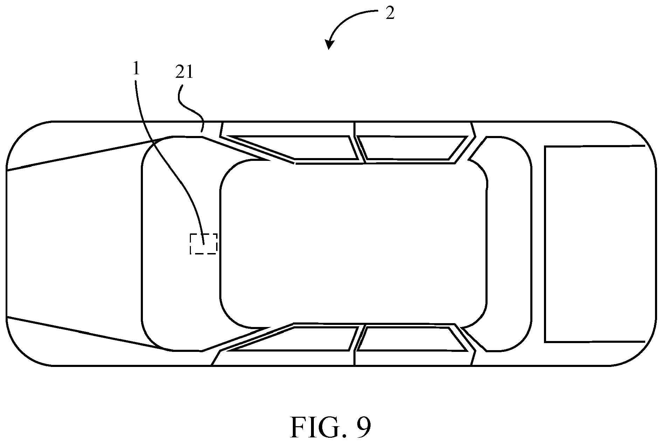

A vehicle 2 is further provided in the present disclosure. Reference can be made to FIG. 9 together, where FIG. 9 is a schematic top view of a vehicle provided in an implementation of the present disclosure. The vehicle 2 includes the vehicle window assembly 1 as described above and a vehicle frame 21. The vehicle window assembly 1 is mounted on the vehicle frame 21. Specifically, for the vehicle window assembly 1, reference may be made to the above description, which will not be repeated herein.

The principles and implementations of the present disclosure are elaborated with specific examples herein. The above illustration of implementations is only used to help to understand core ideas of the present disclosure. At the same time, for those ordinary skill in the art, according to ideas of the present disclosure, there will be changes in specific implementations and application scope. In summary, contents of this specification may not be understood as limitation on the present disclosure.

## Claims

1. A vehicle window assembly, comprising a vehicle window glass, a heating component, and at least two sensors, wherein the vehicle window glass has a functional region, at least two signal transmission windows are defined at intervals in the functional region, the at least two sensors are mounted at an inner side of the vehicle window glass, positions of the at least two sensors are in a one-to-one correspondence with positions of the at least two signal transmission windows, the heating component comprises at least one linear heating element, at least one signal transmission window of the at least two signal transmission windows is extended through by the at least one linear heating element a plurality of times, and at least another signal transmission window of the at least two signal transmission windows is not extended through by the at least one linear heating element.

2. The vehicle window assembly of claim 1, wherein the at least one linear heating element each is a metal wire, a printed silver paste wire, or a carbon fiber wire.

3. The vehicle window assembly of claim 2, wherein the vehicle window glass is a single sheet of tempered glass, and the heating component is fixed between the vehicle window glass and the at least two sensors.

4. The vehicle window assembly of claim 2, wherein the vehicle window glass comprises a first transparent plate, a thermoplastic interlayer, and a second transparent plate, the thermoplastic interlayer is bonded between the first transparent plate and the second transparent plate, and the heating component is fixed between the first transparent plate and the at least two sensors.

5. The vehicle window assembly of claim 1, wherein the at least one signal transmission window of the at least two signal transmission windows is extended through by the at least one linear heating element along a straight path, an arc path, a sinusoidal path, and a rectangular wave-shaped path the plurality of times.

6. The vehicle window assembly of claim 1, wherein the at least another signal transmission window of the at least two signal transmission windows that is not extended through by the at least one linear heating element has at least one edge surrounded by the at least one linear heating element.

7. The vehicle window assembly of claim 1, wherein the at least two sensors each are selected from a group consisting of a visible light camera, an infrared camera, a LiDAR, a rain sensor, and a touch sensor.

8. The vehicle window assembly of claim 1, further comprising a bracket, wherein the bracket is disposed corresponding to the functional region, and the at least two sensors are mounted on the bracket.

9. The vehicle window assembly of claim 1, wherein the at least one linear heating element each comprises a first portion and a second portion connected to the first portion, the first portion is configured to be electrically connected to a power source, the second portion is disposed in one of the at least two signal transmission windows, the at least one linear heating element each further comprises a third portion and a fourth portion connected to the third portion, the third portion is configured to be electrically connected to the power source, at least one edge of the at least another signal transmission window of the at least two signal transmission windows is surrounded by the fourth portion, and a ratio of a total length of the fourth portion to a total length of the second portion ranges from 0.3 to 2.5.

10. The vehicle window assembly of claim 9, wherein at least three edges of the at least another signal transmission window of the at least two signal transmission windows are surrounded by the fourth portion.

11. The vehicle window assembly of claim 2, wherein when the at least one linear heating element each is the metal wire, the at least one linear heating element each is any one or more of a copper wire, a tungsten wire, an aluminum wire, or a copper alloy wire, and the at least one linear heating element each has a diameter ranging from 0.01 mm to 0.5 mm; when the at least one linear heating element each is the printed silver paste wire, the at least one linear heating element each has a printed wire-width ranging from 0.1 mm to 1.0 mm, and a printed thickness ranging from 3 µm to 20 µm; and when the at least one linear heating element each is the carbon fiber wire, the at least one linear heating element each has a diameter ranging from 0.01 mm to 0.5 mm.

12. The vehicle window assembly of claim 1, wherein the at least two signal transmission windows are implemented as three signal transmission windows.

13. The vehicle window assembly of claim 1, wherein a left signal-transmission-window, a middle signal-transmission-window, and a right signal-transmission-window are defined in the functional region, the middle signal-transmission-window is extended through by the at least one linear heating element back and forth, the left signal-transmission-window is not extended through by the at least one linear heating element back and forth, all edges of the left signal-transmission-window are not surrounded by the at least one linear heating element, and an upper edge of the right signal-transmission-window is surrounded by the at least one linear heating element.

14. The vehicle window assembly of claim 1, wherein a left signal-transmission-window, a middle signal-transmission-window, and a right signal-transmission-window are defined in the functional region, the middle signal-transmission-window is extended through by the at least one linear heating element back and forth, the left signal-transmission-window is not extended through by the at least one linear heating element back and forth, all edges of the left signal-transmission-window are not surrounded by the at least one linear heating element, and an upper edge, a lower edge, and a right edge of the right signal-transmission-window are all surrounded by the at least one linear heating element.

15. The vehicle window assembly of claim 1, wherein a left signal-transmission-window, a middle signal-transmission-window, and a right signal-transmission-window are defined in the functional region, the middle signal-transmission-window is extended through by the at least one linear heating element back and forth, an upper edge, a lower edge, and a left edge of the left signal-transmission-window are all surrounded by the at least one linear heating element, and an upper edge, a lower edge, and a right edge of the right signal-transmission-window are all surrounded by the at least one linear heating element.

16. A vehicle comprising the vehicle window assembly of any one of claims 1 to 15 and a vehicle frame, wherein the vehicle window assembly is mounted on the vehicle frame.
